# EUROPEAN PATENT SPECIFICATION

(11) **EP 3 383 822 B1**
(45) Date of publication and mention of the grant of the patent: **07.01.2026**
(21) Application number: 16770680.3
(22) Date of filing: 09.09.2016
(51) Int. Cl.: C04B 28/14, C04B 40/00

(54) **USE OF AN ADDITIVE FOR GYPSUM BUILDING MATERIALS**
VERWENDUNG EINES ADDITIV FÜR GIPSBAUMATERIALIEN
UTILISATION D' UN ADDITIF POUR MATÉRIAUX DE CONSTRUCTION EN GYPSE

(30) Priority: 30.11.2015 DE 102015015300
(43) Date of publication of application: 10.10.2018
(73) Proprietor: Knauf Gips KG, 97346 Iphofen (DE)
(72) Inventor: KÖHLER, Juliane, 97072 Würzburg (DE); KOHLER, Verena, 91433 Scheinfeld (DE)
(74) Representative: dompatent
(86) International application number: PCT/EP2016/001522
(87) International publication number: WO 2017/092837

(56) References cited:
- WO-A2-2004/052802
- CN-A- 102 115 320
- CN-A- 103 864 389
- CN-A- 104 446 245
- CN-A- 104 446 608
- CN-A- 105 804 357
- CN-B- 102 276 227
- CN-B- 102 745 964
- JP-A- 2000 129 258
- JP-A- 2000 211 961
- JP-A- 2000 281 420
- US-A- 2 796 946
- US-A1- 2006 048 680
- US-A1- 2006 288 912
- HORVATH, I. ET AL: "Process for production of portland cement with modified binding stability and rigidity", CHEMICAL ABSTRACTS, vol. 111, no. 24, 11 December 1989 (1989-12-11), pages 263, XP000181244, ISSN: 0009-2258

## Description

The invention relates to a slurry formed from calcined gypsum, water, and an additive for producing gypsum building materials. In particular, the additive for gypsum building materials increases the sag resistance and breaking strength of gypsum building materials. The invention further relates to a shaped gypsum article, to a method for producing shaped gypsum articles, and to the use of an additive for producing shaped gypsum articles for improving the sag resistance of the shaped gypsum articles.

Additives which increase the sag resistance of shaped gypsum articles, in particular gypsum boards, are known from the prior art. The phenomenon of creep in the case of gypsum board, in particular in humid conditions, i.e. for example with high atmospheric humidity, has long been known already. By way of example, DE 17 71 017 B2 describes the use of tartaric acid to reduce the creep of shaped gypsum articles. Better results are attained with polyphosphates, in particular with STMP (sodium trimetaphosphate), for example see WO 99/08978.

In addition, combinations of different reagents are known from the prior art. US 2006/0048680 A1 for example describes the use of a combination of tartaric acid with boric acid or borates as an additive for improving sag resistance. In addition, alkali metal phosphates or alkaline earth metal phosphates, for example STMP, can also be contained.

The invention is set out in the appended set of claims.

The object of the invention is to use a further additive for improving the sag resistance of shaped gypsum articles, wherein the sag resistance of the shaped gypsum articles should be at least just as good as that of shaped gypsum articles which contain STMP as an additive for improving sag resistance. In addition, a slurry formed from calcined gypsum, water, and an additive for producing shaped gypsum articles, shaped gypsum articles and also a method for producing shaped gypsum articles of this type will be provided, wherein said gypsum articles do not contain any STMP, however the sag resistance thereof is at least as good as that of shaped gypsum articles produced with STMP.

The object is achieved by means of a slurry according to claim 1, a shaped gypsum article according to claim 7, a method for producing a shaped gypsum article according to claim 8, and a use of an additive for producing shaped gypsum articles according to claim 9. Features of advantageous embodiments of the invention are described in the respective dependent claims. The word "additive" is used as an encompassing term for the constituents of a gypsum slurry which positively influence the sag resistance of the finished shaped gypsum article. The additive does not necessarily have to be a prefabricated mixture, and instead the individual constituents can also be added individually to a gypsum slurry.

Accordingly, in the slurry of the invention, an additive for producing shaped gypsum articles comprises boric acid and/or salts of boric acid, tartaric acid and/or salts of tartaric acid, and cement. It can be demonstrated that the substances known *per se* constituted by boric acid, borates, tartaric acid, and tartrates (salts of tartaric acid) have an improved effect with regard to sag resistance when they are combined with cement.

Boric acid or borates, that is the salts of boric acid, are contained in the additive in quantities of from 0.01 to 0.15 % by weight in relation to a quantity of calcined gypsum in which the additive is used. Greater quantities of boric acid or borates are avoided on account of the need for a declaration in accordance with the REACH Regulation. Thus, the additive preferably contains 0.01 to 0.1 % by weight of boric acid or borates in relation to a quantity of calcined gypsum.

In accordance with a particularly preferred embodiment, a tartaric acid racemate, i.e. a mixture of D- and L-tartaric acid, is used as tartaric acid. The tartaric acid racemate is a favourable variant of tartaric acid in terms of cost. The tartaric acid and/or the salts of tartaric acid are contained in the additive in quantities of from 0.01 to 0.1 % by weight in relation to the quantity of calcined gypsum in which they are used. The additive preferably contains between 0.01 and 0.03 % by weight of tartaric acid/tartrate or boric acid/borate.

By way of example, a Portland cement can be used as cement. In accordance with the invention, the cement is contained in a quantity of from 0.05 to 0.5 % by weight, preferably 0.08 to 0.25 % by weight, in relation to the quantity of calcined gypsum in which the additive is used.

The invention also relates to shaped gypsum articles, in particular gypsum boards such as plasterboards, which have been produced from a slurry consisting at least of calcined gypsum, water, and an additive for producing shaped gypsum articles from set gypsum (improvement of sag resistance). The additive comprises or contains boric acid and/or salts of boric acid, tartaric acid and/or salts of tartaric acid, and cement.

The invention additionally relates to a method for producing a shaped gypsum article, in particular a gypsum board, comprising the steps of mixing of calcined gypsum with water and an additive, forming a shaped gypsum article and optionally drying the shaped gypsum article to produce shaped gypsum articles from set gypsum (improvement of sag resistance). The additive contains boric acid and/or salts of boric acid, tartaric acid and/or salts of tartaric acid, and cement.

The invention will be explained in greater detail hereinafter on the basis of exemplary embodiments.

Conveyor line tests were carried out with differently composed additives for improving the sag resistance of plasterboards. The produced plasterboards consist of a foamed gypsum core, which is encased by a paperboard web. The boards are produced in accordance with a conventional method, i.e. a gypsum slurry is first produced from beta-hemihydrate, water, the corresponding additive, and further additives, in particular an accelerator and a foamed surfactant solution. Since both tartaric acid and boric acid have the effect of delaying the setting rate of the gypsum slurry, the added quantity of accelerator was set such that approximately constant setting times were obtained for the different slurries. A fine-grained, i.e. powdered potassium sulphate dihydrate was used as accelerator. The selection of the accelerator is not critical within the scope of the invention, and therefore other accelerators with which a person skilled in the art is familiar can also be used.

In addition to the gypsum core, a thin compressed gypsum layer was additionally applied to the back of the visible side of the paperboard web. Some of the slurry produced as described above was conveyed via a pre-compressor pump, where the foam was destroyed in a controlled manner. The rear-side paperboard web was applied directly to the slurry of the core layer. Both the thin gypsum layer and the core layer had the same composition but different densities.

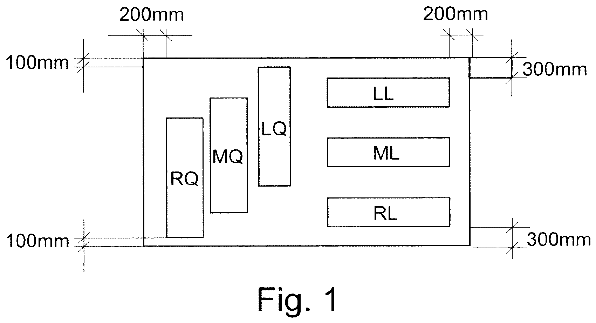

In order to determine the sag of the produced plasterboards, samples measuring 10 cm x 67 cm were cut out from the plasterboards at predefined points, see Fig. 1, of the board. Three longitudinal samples (RL = right longitudinal, ML = middle longitudinal and LL = left longitudinal) and three transverse samples (RQ = right transverse, MQ = middle transverse and LQ = left transverse) were taken per examined board. The longitudinal samples were cut out from the examined boards such that their longitudinal extent ran in the production direction of the boards. The transverse samples were cut out from the examined boards such that their longitudinal extent was arranged perpendicularly to the production direction of the boards. One sample in each case (ML, MQ) was taken from the middle of the board, i.e. with equal distance from the two longitudinal edges of the board, and one sample in each case (LL, LQ and RL, RQ) was taken from a board region arranged closer to the left or right board edge respectively.

The samples thus removed were then dried, standing on their longitudinal edge, in a drying cabinet until a constant weight was reached, and the zero value for the sag determination (starting sag) was determined by means of a precision depth gauge in the middle of the sample.

The samples were stored, supported at the edge (distance between the supports: 60 cm), in a climate chamber at 20 +/- 1 °C and 90 +/- 1 % relative humidity for 7 days. The sag was then determined again in the manner described above, and the absolute value was determined by subtracting the starting sag. The values of the three longitudinal samples and the values of the three transverse samples per board were averaged in each case.

In a first test, the sag of plasterboards containing exclusively STMP as additive (STMP standard, L1) was compared with plasterboards containing a mixture of STMP, boric acid and cement (internal standard, L0), since this mixture is typically used at the conveyor line used for the test. It was found that the sag of the boards of the internal standard (additive mixture formed from 0.022 % by weight STMP, 0.05% by weight boric acid, and 0.1 % by weight cement in relation to the quantity of used calcined gypsum) was slightly poorer than that of the STMP standard, but was still within the error range of the sag of boards with the STMP standard (0.022 % by weight STMP), and therefore the internal standard could be used similarly to the STMP standard.

In addition, a board without additive for improving the sag resistance (without additive, L2) was examined for comparison. The board without additive shows that the sag is up to five times greater than that with use of the STMP standard or the internal standard. The results of the tests are summarised in Tab. 1.

**Tab. 1**

| Sample | Direction | | Sag (mm) | ø Sag (mm) |
|---|---|---|---|---|
| L0 (internal standard: STMP, boric acid, cement) | longitudinal | RL | 2.25 | 2.34 |
| | | ML | 2.34 | |
| | | LL | 2.44 | |
| | transverse | RQ | 3.083 | 2.97 |
| | | MQ | 3.11 | |
| | | LQ | 2.71 | |
| L1 (STMP standard) | longitudinal | RL | 2.17 | 2.23 |
| | | ML | 2.14 | |
| | | LL | 2.37 | |
| | transverse | RQ | 3.43 | 3.32 |
| | | MQ | 3.46 | |
| | | LQ | 3.06 | |
| L2 (without additive) | longitudinal | RL | 8.93 | 8.67 |
| | | ML | 8.72 | |
| | | LL | 8.35 | |
| | transverse | RQ | 14.61 | 14.83 |
| | | MQ | 15.31 | |
| | | LQ | 14.56 | |

Table 2 shows the results of the sag tests on boards comprising the various known additives, individually and in two-way combinations. Here, 0.022 % by weight tartaric acid (L3), or 0.022 % by weight tartaric acid and 0.1 % by weight cement (L4), or 0.05% by weight boric acid and 0.1 % by weight cement (L5) were used as additive.

The results show that none of these combinations achieves the results of the STMP or the internal standard. In particular, the combination of boric acid and cement does not provide acceptable values with regard to the sag of the board samples after storage in the climate chamber.

**Tab. 2**

| Sample | Direction | | Sag (mm) | ø Sag (mm) |
|---|---|---|---|---|
| L3 (tartaric acid) | longitudinal | RL | 3.9 | 3.93 |
| | | ML | 3.94 | |
| | | LL | 3.96 | |
| | transverse | RQ | 6.25 | 5.98 |
| | | MQ | 6.08 | |
| | | LQ | 5.61 | |
| L4 (tartaric acid, cement) | longitudinal | RL | 3.79 | 3.76 |
| | | ML | 3.81 | |
| | | LL | 3.67 | |
| | transverse | RQ | 5.68 | 5.53 |
| | | MQ | 5.45 | |
| | | LQ | 5.46 | |
| L5 (boric acid, cement) | longitudinal | RL | 6.21 | 6.26 |
| | | ML | 6.24 | |
| | | LL | 6.33 | |
| | transverse | RQ | 9.57 | 9.39 |
| | | MQ | 9.58 | |
| | | LQ | 9.03 | |

Combinations according to the invention of boric acid, tartaric acid and cement and also the specific sag values for these combinations can be found in Tab. 3. Since this test was performed on a different day compared with the tests considered above, the described boards with standard additives were measured again.

In tests L10 to L12, the quantity of tartaric acid was varied with constant quantity of boric acid and cement. In all three tests 0.05 % by weight boric acid and 0.1 % by weight cement were contained, in each case in relation to the quantity of used calcined gypsum. The quantity of tartaric acid was varied between 0.011 and 0.033 % by weight. The sag was lowest both in the longitudinal and in the transverse direction with a quantity of 0.022 % by weight tartaric acid (L11). These samples demonstrated the lowest measured sag from the series of tests.

In tests L14 and L15 the content of tartaric acid (0.022 % by weight) and the content of cement (0.1 % by weight) were kept constant. The content of boric acid was 0.025 % by weight in L14 and 0.075 % by weight in L15. In this series of tests Sample L11 also fits into this series of test samples, and contained the same tartaric acid and cement contents as L14 and L15, but 0.05 % by weight of boric acid. The lowest sag of the samples containing varying levels of boric acid, both in the longitudinal and transverse direction, were provided by sample L15.

In sample L16 the cement content was increased from 0.1 (sample L11) to 0.2 % by weight, and in sample L17 the cement content was increased to 0.3 % by weight, whereas the contents of tartaric acid and boric acid were kept as high as in sample L11. All of the samples L11, L16 and L17 had a similar, low sag. The best results, both in the longitudinal and in the transverse direction, were provided by sample L17.

Apart from the three-way combination of additives according to the invention, further two-way combinations were examined. The sample L13 corresponded in terms of its content of cement and tartaric acid to sample L12; the addition of 0.05 % by weight of boric acid, however, was omitted. The values of sample L13 for the measured sag after the treatment in the climate chamber are much poorer compared to sample L12, which has a similar composition. The sag is more than 1.5 times greater than that measured for L12.

In test L19 a mixture of 0.022 % by weight tartaric acid and 0.05 % by weight boric acid was used. If this mixture is compared to the internal standard (L18), it can be seen that the sag of the samples from L19 is slightly greater on average than with the standard. However, it should also be noted that the sag values are much poorer than those of the samples of L17, which additionally contain 0.3 % by weight cement.

**Tab. 3**

| Sample | STMP (% by weight) | Tartaric acid (% by weight) | Boric acid (% by weight) | Cement (% by weight) | Direction | | Sag (mm) | Ø Sag (mm) |
|---|---|---|---|---|---|---|---|---|
| L9 | 0.022 | - | 0.05 | 0.1 | longitudinal | RL | 3.32 | 3.39 |
| | | | | | | ML | 3.40 | |
| | | | | | | LL | 3.46 | |
| | | | | | transverse | RQ | 3.08 | 3.15 |
| | | | | | | MQ | 2.82 | |
| | | | | | | LQ | 3.55 | |
| L10 | - | 0.011 | 0.05 | 0.1 | longitudinal | RL | 3.15 | 3.12 |
| | | | | | | ML | 3.20 | |
| | | | | | | LL | 3.00 | |
| | | | | | transverse | RQ | 2.81 | 2.67 |
| | | | | | | MQ | 2.71 | |
| | | | | | | LQ | 2.48 | |
| L11 | - | 0.022 | 0.05 | 0.1 | longitudinal | RL | 2.62 | 2.61 |
| | | | | | | ML | 2.63 | |
| | | | | | | LL | 2.58 | |
| | | | | | transverse | RQ | 1.78 | 2.04 |
| | | | | | | MQ | 2.04 | |
| | | | | | | LQ | 2.31 | |
| L12 | - | 0.033 | 0.05 | 0.1 | longitudinal | RL | 3.24 | 3.15 |
| | | | | | | ML | 3.17 | |
| | | | | | | LL | 3.05 | |
| | | | | | transverse | RQ | 2.55 | 2.37 |
| | | | | | | MQ | 2.45 | |
| | | | | | | LQ | 2.11 | |
| L13 | - | 0.033 | - | 0.1 | longitudinal | RL | 5.55 | 5.51 |
| | | | | | | ML | 5.69 | |
| | | | | | | LL | 5.29 | |
| | | | | | transverse | RQ | 3.63 | 3.95 |
| | | | | | | MQ | 4.03 | |
| | | | | | | LQ | 4.18 | |
| L14 | - | 0.022 | 0.025 | 0.1 | longitudinal | RL | 3.93 | 3.69 |
| | | | | | | ML | 3.78 | |
| | | | | | | LL | 3.37 | |
| | | | | | transverse | RQ | 2.76 | 2.78 |
| | | | | | | MQ | 2.73 | |
| | | | | | | LQ | 2.85 | |
| L15 | - | 0.022 | 0.075 | 0.1 | longitudinal | RL | 2.33 | 2.44 |
| | | | | | | ML | 2.56 | |
| | | | | | | LL | 2.42 | |
| | | | | | transverse | RQ | 1.64 | 1.93 |
| | | | | | | MQ | 1.81 | |
| | | | | | | LQ | 2.34 | |
| L16 | - | 0.022 | 0.05 | 0.2 | longitudinal | RL | 2.73 | 2.73 |
| | | | | | | ML | 2.52 | |
| | | | | | | LL | 2.66 | |
| | | | | | transverse | RQ | 1.86 | 2.02 |
| | | | | | | MQ | 2.18 | |
| | | | | | | LQ | 2.02 | |
| L17 | - | 0.022 | 0.05 | 0.3 | longitudinal | RL | 2.37 | 2.34 |
| | | | | | | ML | 2.37 | |
| | | | | | | LL | 2.28 | |
| | | | | | transverse | RQ | 1.93 | 1.91 |
| | | | | | | MQ | 1.92 | |
| | | | | | | LQ | 1.87 | |
| L18 | 0.022 | - | 0.05 | 0.1 | longitudinal | RL | 3.11 | 3.08 |
| | | | | | | ML | 3.07 | |
| | | | | | | LL | 3.05 | |
| | | | | | transverse | RQ | 2.66 | 2.77 |
| | | | | | | MQ | 2.73 | |
| | | | | | | LQ | 2.92 | |
| L19 | - | 0.022 | 0.05 | - | longitudinal | RL | 3.06 | 3.09 |
| | | | | | | ML | 3.12 | |
| | | | | | | LL | 3.10 | |
| | | | | | transverse | RQ | 2.81 | 2.83 |
| | | | | | | MQ | 2.90 | |
| | | | | | | LQ | 2.78 | |

Table 4 shows tests in which individual additive components were replaced for alternatives, i.e. L-tartaric acid, borates and tartrates.

Again, a mixture of 0.022 % by weight STMP, 0.05 % by weight boric acid, and 0.1 % by weight cement was used as internal standard (L24). In all other samples (L21 to L23), a component of the additive was varied.

In L21 L-tartaric acid was used in a quantity of 0.022 % by weight instead of STMP. The quantity of boric acid (0.05 % by weight) and the quantity of cement (0.1 % by weight) corresponded to the internal standard.

In L22 D/L-tartaric acid was used in a quantity of 0.022 % by weight instead of STMP, whereas the quantity of boric acid and cement corresponded to the internal standard (i.e. 0.05% by weight boric acid and 0.1 % by weight cement).

In L23 D/L-tartaric acid was again used in a quantity of 0.022 % by weight. In addition, a quantity of a borate, specifically pentasodium borate, equivalent to 0.05% by weight boric acid was used instead of boric acid.

The results show that the replacement of STMP with L-tartaric acid (L21) or D/L-tartaric acid (L22) is possible without loss of quality, and that even better results than with the internal standard are attained in the sag test with these compositions.

The replacement of boric acid with pentasodium borate (L23) is likewise possible, but provides a slightly poorer result in the sag test compared to the internal standard or L22. L22 differs from L23 merely by the use of boric acid instead of the borate used in L23.

In Tab. 5 the replacement of STMP with a tartrate, that is a salt of a tartaric acid, was tested. The internal standard (L25) contained 0.022 % by weight STMP, 0.05 % by weight boric acid, and 0.1 % by weight cement. In the sample L26 STMP was replaced by the same quantity of D/L-tartaric acid. In the sample L27 STMP was replaced by the same quantity of Na/K tartrate.

The results show that the samples with the tartrate in combination with boric acid and cement (L27) even attained a slightly lower sag in the sag test compared to the sample with the internal standard (L25).

The lowest sag values, however, were achieved by the sample L26, which contained D/L-tartaric acid instead of STPM (L25). The contents of boric acid and cement were the same in both samples.

**Tab. 4**

| Sample | L-tartaric acid (% by weight) | D/L-tartaric acid (% by weight) | Borate (% by weight) | Direction | | Sag (mm) | Ø Sag (mm) |
|---|---|---|---|---|---|---|---|
| L21 | 0.022 | | | longitudinal | RL | 2.76 | 2.79 |
| | | | | | ML | 2.71 | |
| | | | | | LL | 2.90 | |
| | | | | transverse | RQ | 2.68 | 3.00 |
| | | | | | MQ | 3.15 | |
| | | | | | LQ | 3.17 | |
| L22 | | 0.022 | | longitudinal | RL | 2.33 | 2.34 |
| | | | | | ML | 2.31 | |
| | | | | | LL | 2.39 | |
| | | | | transverse | RQ | 2.52 | 2.65 |
| | | | | | MQ | 2.72 | |
| | | | | | LQ | 2.72 | |
| L23 | | 0.022 | 0.05 | longitudinal | RL | 4.35 | 3.91 |
| | | | | | ML | 3.76 | |
| | | | | | LL | 3.63 | |
| | | | | transverse | RQ | 3.82 | 3.69 |
| | | | | | MQ | 3.75 | |
| | | | | | LQ | 3.51 | |
| L24 | internal standard; see text | | | longitudinal | RL | 3.52 | 3.46 |
| | | | | | ML | 3.46 | |
| | | | | | LL | 3.39 | |
| | | | | transverse | RQ | 3.14 | 3.74 |
| | | | | | MQ | 4.00 | |
| | | | | | LQ | 4.08 | |

**Tab. 5**

| Sample | STMP | D/L-tartaric acid (% by weight) | Na/K-tartrate (% by weight) | Direction | | Sag (mm) | Ø Sag (mm) |
|---|---|---|---|---|---|---|---|
| L25 | 0.022 | | | longitudinal | RL | 3.09 | 3.19 |
| | | | | | ML | 3.59 | |
| | | | | | LL | 2.89 | |
| | | | | transverse | RQ | 3.15 | 3.69 |
| | | | | | MQ | 4.05 | |
| | | | | | LQ | 3.88 | |
| L26 | | 0.022 | | longitudinal | RL | 2.61 | 2.57 |
| | | | | | ML | 2.63 | |
| | | | | | LL | 2.48 | |
| | | | | transverse | RQ | 2.63 | 2.67 |
| | | | | | MQ | 2.83 | |
| | | | | | LQ | 2.56 | |
| L27 | | | 0.022 | longitudinal | RL | 3.16 | 2.93 |
| | | | | | ML | 2.76 | |
| | | | | | LL | 2.88 | |
| | | | | transverse | RQ | 2.99 | 3.29 |
| | | | | | MQ | 3.52 | |
| | | | | | LQ | 3.36 | |

## Claims

1. A slurry formed from calcined gypsum, water, and an additive for producing shaped gypsum articles, comprising boric acid and/or salts of boric acid, tartaric acid and/or salts of tartaric acid, and cement,
wherein the boric acid and/or the salts of boric acid is/are contained in a quantity of from 0.01 to 0.15 % by weight in relation to a quantity of calcined gypsum,
the tartaric acid and/or the salts of tartaric acid is/are contained in a quantity of from 0.001 to 0.1 % by weight in relation to the quantity of calcined gypsum and
cement is contained in a quantity of from 0.05 to 0.5 % by weight in relation to the quantity of calcined gypsum.

2. The slurry according to claim 1, **characterised in that** the boric acid and/or the salts of boric acid is/are contained in a quantity of from 0.01 to 0.1 % by weight, in relation to a quantity of calcined gypsum.

3. The slurry according to either one of the preceding claims, **characterised in that** the tartaric acid is tartaric acid racemate or L-tartaric acid.

4. The slurry according to any one of the preceding claims, **characterised in that** the tartaric acid and/or the salts of tartaric acid is/are contained in a quantity of from 0.005 to 0.03 % by weight, in relation to the quantity of calcined gypsum.

5. The slurry according to any one of the preceding claims, **characterised in that** the cement is a Portland cement.

6. The slurry according to any one of the preceding claims, **characterised in that** the cement is contained in a quantity of 0.08 to 0.25 % by weight, in relation to the quantity of calcined gypsum.

7. A shaped gypsum article, in particular gypsum board, produced at least from a slurry as defined in claims 1 to 6.

8. A method for producing shaped gypsum articles, in particular a gypsum board, comprising the steps of mixing of calcined gypsum with water and an additive, wherein the additive comprises boric acid and/or salts of boric acid, tartaric acid and/or salts of tartaric acid and cement, forming a shaped gypsum article and optionally drying the shaped gypsum article,
wherein the boric acid and/or the salts of boric acid is/are contained in a quantity of from 0.01 to 0.15 % by weight in relation to a quantity of calcined gypsum,
the tartaric acid and/or the salts of tartaric acid is/are contained in a quantity of from 0.001 to 0.1 % by weight in relation to the quantity of calcined gypsum and
cement is contained in a quantity of from 0.05 to 0.5 % by weight in relation to the quantity of calcined gypsum.

9. Use of an additive for producing shaped gypsum articles, comprising boric acid and/or salts of boric acid, tartaric acid and/or salts of tartaric acid, and cement for improving the sag resistance of the shaped gypsum articles.

10. The use of claim 9, wherein the tartaric acid is L-tartaric acid.

## Patentansprüche

1. Aufschlämmung, gebildet aus kalziniertem Gips, Wasser und einem Additiv zur Herstellung von geformten Gipsartikeln, das Borsäure und/oder Salze von Borsäure, Weinsäure und/oder Salze von Weinsäure sowie Zement umfasst,
wobei die Borsäure und/oder die Salze der Borsäure in einer Menge von 0,01 bis 0,15 Gew.-% enthalten sind, bezogen auf die Menge des kalzinierten Gipses,
die Weinsäure und/oder die Salze der Weinsäure in einer Menge von 0,001 bis 0,1 Gew.-% enthalten sind, bezogen auf die Menge des kalzinierten Gipses, und
Zement in einer Menge von 0,05 bis 0,5 Gew.-% enthalten ist, bezogen auf die Menge des kalzinierten Gipses.

2. Aufschlämmung gemäß Anspruch 1, **dadurch gekennzeichnet, dass** die Borsäure und/oder die Salze der Borsäure in einer Menge von 0,01 bis 0,1 Gew.-% enthalten sind, bezogen auf die Menge des kalzinierten Gipses.

3. Aufschlämmung gemäß einem der vorstehenden Ansprüche, **dadurch gekennzeichnet, dass** es sich bei der Weinsäure um ein Weinsäure-Racemat oder L-Weinsäure handelt.

4. Aufschlämmung gemäß einem der vorstehenden Ansprüche, **dadurch gekennzeichnet, dass** die Weinsäure und/oder die Salze der Weinsäure in einer Menge von 0,005 bis 0,03 Gew.-% enthalten sind, bezogen auf die Menge des kalzinierten Gipses.

5. Aufschlämmung gemäß einem der vorstehenden Ansprüche, **dadurch gekennzeichnet, dass** der Zement ein Portlandzement ist.

6. Aufschlämmung gemäß einem der vorstehenden Ansprüche, **dadurch gekennzeichnet, dass** der Zement in einer Menge von 0,08 bis 0,25 Gew.-% enthalten ist, bezogen auf die Menge des kalzinierten Gipses.

7. Geformter Gipsartikel, insbesondere Gipskartonplatte, hergestellt aus wenigstens einem Aufschlämmung gemäß den Ansprüchen 1 bis 6.

8. Verfahren zur Herstellung von geformten Gipsartikeln, insbesondere einer Gipskartonplatte, umfassend die Schritte des Mischens von kalziniertem Gips mit Wasser und einem Additiv, wobei das Additiv Borsäure und/oder Salze von Borsäure, Weinsäure und/oder Salze von Weinsäure sowie Zement umfasst, des Bildens eines geformten Gipsartikels und gegebenenfalls des Trocknens des geformten Gipsartikels,
wobei die Borsäure und/oder die Salze der Borsäure in einer Menge von 0,01 bis 0,15 Gew.-% enthalten sind, bezogen auf die Menge des kalzinierten Gipses,
die Weinsäure und/oder die Salze der Weinsäure in einer Menge von 0,001 bis 0,1 Gew.-% enthalten sind, bezogen auf die Menge des kalzinierten Gipses, und
Zement in einer Menge von 0,05 bis 0,5 Gew.-% enthalten ist, bezogen auf die Menge des kalzinierten Gipses.

9. Verwendung eines Additivs zur Herstellung von geformten Gipsartikeln, das Borsäure und/oder Salze von Borsäure, Weinsäure und/oder Salze von Weinsäure sowie Zement umfasst, zur Verbesserung des Durchbiegewiderstandes der geformten Gipsartikel.

10. Verwendung gemäß Anspruch 9, wobei es sich bei der Weinsäure um L-Weinsäure handelt.

## Revendications

1. Boue formée à partir de gypse calciné, d'eau et d'un additif pour la production d'articles en gypse façonnés, comprenant de l'acide borique et/ou des sels d'acide borique, de l'acide tartrique et/ou des sels d'acide tartrique, et du ciment, dans laquelle l'acide borique et/ou les sels d'acide borique sont contenus en une quantité allant de 0,01 à 0,15 % en poids par rapport à une quantité de gypse calciné, l'acide tartrique et/ou les sels d'acide tartrique sont contenus en une quantité allant de 0,001 à 0,1 % en poids par rapport à la quantité de gypse calciné et
le ciment est contenu en une quantité allant de 0,05 à 0,5 % en poids par rapport à la quantité de gypse calciné.

2. Boue selon la revendication 1, **caractérisée en ce que** l'acide borique et/ou les sels d'acide borique sont contenus en une quantité allant de 0,01 à 0,1 % en poids, par rapport à une quantité de gypse calciné.

3. Boue selon l'une quelconque des revendications précédentes, **caractérisée en ce que** l'acide tartrique est le racémate d'acide tartrique ou l'acide L-tartrique.

4. Boue selon l'une quelconque des revendications précédentes, **caractérisée en ce que** l'acide tartrique et/ou les sels d'acide tartrique sont contenus en une quantité allant de 0,005 à 0,03 % en poids, par rapport à la quantité de gypse calciné.

5. Boue selon l'une quelconque des revendications précédentes, **caractérisée en ce que** le ciment est un ciment portland.

6. Boue selon l'une quelconque des revendications précédentes, **caractérisée en ce que** le ciment est contenu en une quantité allant de 0,08 à 0,25 % en poids, par rapport à la quantité de gypse calciné.

7. Article en gypse façonné, en particulier plaque de plâtre, produit au moins à partir d'une boue selon les revendications 1 à 6.

8. Procédé de fabrication d'articles en gypse façonnés, en particulier d'une plaque de plâtre, comprenant les étapes consistant à mélanger du gypse calciné avec de l'eau et un additif, dans lequel l'additif comprend de l'acide borique et/ou des sels d'acide borique, de l'acide tartrique et/ou des sels d'acide tartrique et du ciment, former un article en gypse façonné et, éventuellement, sécher l'article en gypse façonné, dans lequel l'acide borique et/ou les sels d'acide borique sont contenus en une quantité allant de 0,01 à 0,15 % en poids par rapport à une quantité de gypse calciné, l'acide tartrique et/ou les sels de l'acide tartrique sont contenus en une quantité allant de 0,001 à 0,1 % en poids par rapport à la quantité de gypse calciné et
le ciment est contenu en une quantité allant de 0,05 à 0,5 % en poids par rapport à la quantité de gypse calciné.

9. Utilisation d'un additif pour la production d'articles en gypse façonnés, comprenant de l'acide borique et/ou des sels d'acide borique, de l'acide tartrique et/ou des sels d'acide tartrique, et du ciment pour améliorer la résistance à l'affaissement des articles en gypse façonnés.

10. Utilisation selon la revendication 9, dans laquelle l'acide tartrique est l'acide L-tartrique.
